(19) Europäisches Patentamt

European Patent Office

Office européen des brevets

(11) **EP 0 916 935 B1**

(12) **EUROPÄISCHE PATENTSCHRIFT**

(45) Veröffentlichungstag und Bekanntmachung des Hinweises auf die Patenterteilung:
**23.06.2004 Patentblatt 2004/26**

(51) Int Cl.⁷: **G01M 17/013**, G01M 17/02

(21) Anmeldenummer: **98120054.6**

(22) Anmeldetag: **23.10.1998**

(54) **Vorrichtung und Verfahren zur Festigkeitsprüfung von Kraftfahrzeugrädern**

Device and method for testing the resistance of vehicle wheels

Dispositif et méthode pour tester la résistance des roues de véhicules

(84) Benannte Vertragsstaaten:
**BE DE ES FR GB IT**

(30) Priorität: **14.11.1997 DE 19750483**

(43) Veröffentlichungstag der Anmeldung:
**19.05.1999 Patentblatt 1999/20**

(73) Patentinhaber: **Hayes Lemmerz Holding GmbH
53639 Königswinter (DE)**

(72) Erfinder: **Schwendemann, Heinz Dr.
53225 Bonn (DE)**

(74) Vertreter: **Hennicke, Ernst Rüdiger, Dipl.-Ing.
Patentanwälte
Buschhoff Hennicke Althaus
Postfach 19 04 08
50501 Köln (DE)**

(56) Entgegenhaltungen:
**EP-A- 0 063 245       EP-A- 0 147 595
DE-A- 2 726 927       DE-A- 3 040 252
DE-A- 4 111 265       GB-A- 1 438 200
US-A- 3 780 573       US-A- 4 499 759
US-A- 4 502 328**

**Beschreibung**

Die Erfindung betrifft eine Vorrichtung zur Festigkeitsprüfung von Kraftfahrzeugrädern nach dem Oberbegriff des Anspruchs 1. Die Erfindung ist darüber hinaus auf ein Verfahren zum Prüfen der Festigkeit von im wesentlichen aus einer Radfelge und einer daran angeschlossenen Radschüssel bestehenden Kraftfahrzeugrädern nach dem Oberbegriff des Anspruch 13 gerichtet.

Kraftfahrzeugräder unterliegen in ihrem Betrieb hohen Belastungen, die hauptsächlich durch die Radaufstands-Kräfte in Folge des Eigengewichts des Fahrzeuges und die Radseitenkräfte entstehen, die bei Kurvenfahrt oder Fahren am Hang auftreten. Um solche Belastungen zu simulieren und so zu überprüfen, ob das Rad seine geforderte Lebensdauer erreicht, sind verschiedene Vorrichtungen bekannt, die auch als Umlaufbiegeprüfmaschinen bezeichnet werden.

Im wesentlichen unterscheidet man bei Umlaufbiegeprüfmaschinen zwischen unwucht- und gewichtsbelasteten Maschinen. Bei unwuchtbelasteten Maschinen wird die Radfelge an einer feststehenden Aufspannvorrichtung festgespannt und die Radschüssel mit einem Lasteinleitungselement in Form eines Hebelarms verbunden, der an seinem freien Ende von einem rotierenden Exzenter mit einem Moment und einer rotierenden Radiallast beaufschlagt wird. Bei gewichtsbelasteten Maschinen wird das Rad üblicherweise mit seiner Felge an einer drehbaren Aufspannvorrichtung befestigt, während an der Radschüssel ein Lasteinleitungselement in Form eines Hebelarmes angreift, an dessen freien Ende eine Querkraft wirkt und so auf die Radschüssel ein Biegemoment und eine Radialkraft ausübt. Dabei sind auch Umlaufbiegeprüfmaschinen bekannt (DE 41 11 265 A1), bei denen das Rad nicht mittels am Felgenhorn angreifenden Haltepratzen eingespannt wird, sondern bei denen das Rad relativ zur Aufspannvorrichtung Schwenkbewegungen ausführen kann, um den sonst bestehenden Nachteil zu vermeiden, symmetrische Belastungen hervorzurufen, die die im tatsächlichen Betrieb auftretenden, unsymmetrischen Belastungen unzutreffend simulieren. Bei dieser bekannten Prüfmaschine ist also unter Verzicht auf eine axiale Einspannung des Rades lediglich eine längs seiner Achse verlaufende, zugfeste Anlenkung des prüflingsseitigen Endes des Achszapfens vorgesehen.

Die bekannten Maschinen haben den Nachteil, daß bei von Maschine zu Maschine verschiedenen Hebelarmlängen das Rad zwar mit gleich großen Biegemomenten belastet werden kann, die dabei auf das Rad gleichzeitig zusätzlich einwirkenden Radialkräfte jedoch verschieden sind. Dies hat unterschiedliche lokale Beanspruchungen desselben Rades bei dessen Überprüfung in verschiedenen Umlaufbiegeprüfmaschinen zur Folge, so daß sich voneinander abweichende Bruchlagen und Lebensdauerwerte ergeben und die von zwei Prüfmaschinen erhaltenen Prüfergebnisse kaum miteinander vergleichbar sind. Zwar werden häufig definierte Hebelarmlängen vorgegeben; es hat sich aber bis heute kein einheitliches Maß für die Hebelarmlänge durchsetzen können und es sind nach wie vor Biegeprüfmaschinen mit unterschiedlichen Armlängen im Einsatz.

Von einigen Fahrzeugherstellern wird angestrebt, die im Fahrbetrieb auf das Rad wirkenden Radaufstands- und Radseitenkräfte möglichst realistisch zu simulieren und hierzu Biegeprüfmaschinen zu verwenden, mit denen es möglich ist, eine Belastung auf das Rad auszuüben, die nicht nur in ihrer Größe der im Fahrbetrieb auftretenden Beanspruchung entspricht, sondern deren Wirkungslinie auch durch den Radaufstandspunkt verläuft.

Um diesen Anforderungen gerecht zu werden, sind Umlaufbiegeprüfmaschinen bekannt, bei denen die Radialkraft durch ein kompliziertes Hebelarmgetriebe in der Lastebene der Radaufstandskraft eingeleitet wird bzw. bei der die Beanspruchung des Rades in den beiden Richtungen parallel und radial zur Radachse durch Aufteilung der Kraftresultierenden in eine Axial- und eine Radialkraft an geeigneter Position realisiert wird. Diese Maschinen, die den im Fahrbetrieb maßgeblichen Lastangriffspunkt bei der Festigkeitsprüfung mit berücksichtigen, haben den Nachteil, daß zur Anpassung an unterschiedliche Radgrößen und Einpresstiefen der zu prüfenden Räder die Position des Kraftangriffspunktes jedesmal verändert werden muß, was bei der Konstruktion des Hebelgetriebes durch geeignete Verstellmöglichkeiten zu berücksichtigen ist. Die Konstruktion solcher Maschinen und auch ihre Einstellung beim Prüfen verschiedener Räder gestaltet sich somit sehr aufwendig. Darüber hinaus bleibt der Bereich begrenzt, innerhalb dessen der Kraftangriffspunkt variiert werden kann, so daß solche Maschinen üblicherweise nur für einen engen Einsatzbereich konzipiert sind und nur Räder mit wenig voneinander abweichenden Abmessungen prüfen können.

Bei dieser Sachlage stellt sich insbesondere für Räderhersteller, die Räder der unterschiedlichsten Abmessungen an viele verschiedene Fahrzeughersteller liefern, das Problem, zur Durchführung der verschiedenen, geforderten Prüfverfahren viele verschiedene, spezielle Prüfmaschinen besitzen zu müssen, die miteinander nicht kompatibel sind und daher auch nicht optimal ausgelastet werden können.

Aus der US-A-4 499 759 ist ein Räderprüfstand der gattungsgemäßen Art bekannt, bei dem zur Festigkeitsprüfung eines Rades dieses mit seiner Radschüssel an ein Lasteinleitungselement angeschlossen ist, an dem insgesamt drei Lastkrafterzeuger angreifen. Zwei der Lastkrafterzeuger sind im Abstand voneinander so angeordnet, daß die damit erzeugbaren Lastkräfte parallel zueinander auf das Lasteinleitungselement quer zu dessen Längsachse einwirken, während der dritte Lastkrafterzeuger koaxial zum Lasteinleitungselement ausgerichtet ist Bei diesem bekannten Räderprüfstand stützt sich das Rad mit einem auf seine Felge aufgezogenen Reifen an einem starren Querträger einer Rahmenkonstruktion ab, d.h. die von den Lastkrafterzeugern auf das Rad ausgeübten Kräfte werden über den elastischen Reifen an die Rahmenkonstruktion abgetragen. Dies hat zur Folge, daß sich während einer Messung der Reifenaufstandspunkt verschiebt, wodurch die beim Fahren auf das Rad wirkenden Belastungen nicht realitätsgetreu simuliert werden. Dies gilt um so mehr, als es sich bei dem aus der US-A- 4 499 759 bekannten Prüfverfahren um ein statisches Verfahren handelt, bei dem von einer Drehung des Rades während des Prüfvorgangs Abstand genommen werden soll.

Aufgabe der Erfindung ist es, eine Vorrichtung und ein Verfahren der gattungsgemäßen Art so auszubilden, daß es möglich ist, mit nur einer Maschine den gesamten Prüfbereich von einer Belastung des Rades lediglich mit einer reinen Radialkraft oder mit einer reinen Axialkraft ohne Moment bis hin zu einer Belastung mit einem reinen Moment ohne Radialkraft bzw. ohne Axialkraft zu simulieren, und zwar unabhängig von den Abmessungen des zu prüfenden Rades. Mit dem erfindungsgemäßen Verfahren und der Vorrichtung soll es also möglich sein, die Lastarten der bekannten Biegeprüfmaschinen für praktisch alle Radgrößen nachzuahmen.

Diese Aufgabe wird mit der erfindungsgemäßen Vorrichtung mit den Merkmalen des Anspruchs 1 gelöst. Die Lösung der Aufgabe erfolgt verfahrensgemäß mit den Merkmalen des unabhängigen Anspruchs 13.

Da die von den Lastkraft-Erzeugern auf das Lasteinleitungselement ausgeübten Kräfte in ihrer Größe frei einstellbar sind, kann damit sowohl eine reine Momentenbelastung des Rades durch zwei gleich große, aber entgegengesetzt wirkende Kräfte simuliert werden, als auch eine einaxiale Kraftbelastung, ohne das Rad mit einem Moment im Aufspannbereich zu beaufschlagen.

Durch den am Lasteinleitungselement angreifenden dritten Lastkraft-Erzeuger, dessen damit erzeugte Lastkraft vorzugsweise eine Wirkungslinie hat, die unter einem rechten Winkel zu den Wirkungslinien der beiden parallelen Lastkräfte verläuft, können durch die drei auf das Lasteinleitungselement ausgeübten Lastkräfte die im Fahrbetrieb auf das Rad wirkende Radaufstandskraft und Radseitenkraft an beliebigen Radaufstandspunkt ohne Geometrieveränderungen am Prüfstand simuliert.werden, so daß mit ein und derselben Vorrichtung verläßliche Prüfergebnisse für Räder der unterschiedlichsten Abmessungen gewonnen werden können, die eine zuverlässige Aussage über deren Festigkeit erlauben. Die von den Lastkraft-Erzeugern auf das Lasteinleitungselement auszuübenden Kräfte können einfach unter Berücksichtigung der Kraftangriffspunkte der Lastkrafterzeuger durch Aufstellung der Momenten- und Kraftgleichgewichts-Gleichungen um

den Radaufspannpunkt ermittelt werden, wobei die zu simulierenden Radaufstands- und Seitenkräfte und die Maße für den Reifenradius und die Einpresstiefe vorgegeben werden, unter denen diese im Fahrbetrieb im Rad angreifen.

Zweckmäßig handelt es sich bei den Lastkrafterzeugern um Hydraulikzylinder, vorzugsweise um beidseitig wirksame Zylinder, mit denen es möglich ist, Kräfte beliebiger Größe durch Änderung des hydraulischen Drucks im Hydrauliksystem in einem großen Bereich zu erzeugen. Selbstverständlich ist es auch möglich, die Lastkräfte in anderer, geeigneter Weise zu erzeugen, beispielsweise mit Hilfe von am Lasteinleitungselement angreifenden Gewichten, Federn mit veränderlicher Vorspannung, mit Hilfe von Pneumatikzylindern od.dgl..

Das Lasteinleitungselement besteht zweckmäßig im wesentlichen aus einem etwa koaxial und drehbar am Rad anschließbaren Hebelarm. Das Rad selbst ist vorzugsweise mit seiner Radfelge an der Aufspannvorrichtung befestigbar, während das Lasteinleitungselement an der Radschüssel angeschlossen wird.

Die Aufspannvorrichtung besteht zweckmäßig im wesentlichen aus einer an einer Antriebswelle angeordneten Aufspannplatte, an der das Rad mit einem oder beiden Felgenhörnern mittels Aufspannbacken festgelegt werden kann. Das Lasteinleitungselement ist vorzugsweise an seinem radseitigen Ende mit einem Lagerelement ähnlich wie ein Achsschenkel mit einem Radlager zum Anschluß an das Rad versehen, das die relative Verdrehbarkeit von Aufspannvorrichtung und Lasteinleitungselement ermöglicht.

Eine besonders vorteilhafte Ausgestaltung ergibt sich, wenn die Lastkrafterzeuger für die parallelen Lastkräfte orthogonal zur Radachse am Lasteinleitungselement angreifen. Bei dieser Ausgestaltung ist es dann möglich, mittels zweier als Lastkrafterzeuger verwendeten, parallel zueinander wirkenden Hydraulikzylinder ein freies Moment und zusätzlich eine Radialkraft auf das Rad auszuüben, was einer Belastung allein durch eine Radaufstandskraft entspricht, die unter einem Abstand bzw. einer Einpresstiefe von der Spannfläche des Rades an der Radnabe angreift. Selbstverständlich ist es auch möglich, diese Lastkrafterzeuger für die antiparallelen Lastkräfte parallel zur Radachse am Lasteinleitungselement-angreifen zu lassen. Mit den beiden so angeordneten Lastkrafterzeugern ist es dann möglich, eine Belastung des Rades in Form eines Moments und einer zusätzlichen Axialkraft ohne Radialkraft zu simulieren, also einen Belastungsfall, der im Fahrbetrieb tatsächlich nicht auftreten dürfte. Der Lastkrafterzeuger für die dritte Lastkraft greift wie bereits erwähnt vorzugsweise orthogonal zu den Wirkungslinien der beiden parallelen Lastkräfte am Lasteinleitungselement an. Diese Ausgestaltung erlaubt eine einfache und schnelle Berechnung der drei Lastkräfte.

Die Radfelge ist zweckmäßig mit ihrem äußeren Felgenhorn an der Aufspannvorrichtung befestigbar. Dies ermöglicht eine besonders schnelle Montage des Rades am Prüfstand. Wenn dies im Einzelfall gefordert wird, ist es selbstverständlich auch möglich, die Aufspannvorrichtung so auszugestalten, daß die Radfelge mit ihrem inneren Felgenhorn daran befestigbar ist oder sogar so, daß die Aufspannvorrichtung die Radfelge sowohl an ihrem inneren als auch an ihrem äußeren Felgenhorn hält. In diesen Fällen kann die Aufspannvorrichtung mittels einer Hohlwelle am Maschinenrahmen drehbar gelagert sein, wobei das Lasteinleitungselement dann die Hohlwelle mit Spiel durchsetzt.

Der Erfindung liegt die Erkenntnis zugrunde, daß es durch Erzeugung eines freien Moments durch zwei antiparallele Lastkräfte möglich ist, den Biegemomentenverlauf einer weiteren, am Lasteinleitungselement angreifenden Lastkraft in seinem Niveau zu verschieben, was einer Lageänderung der Kraftresultierende vollständig äquivalent ist. Indem auf das Krafteinleitungselement an festen Krafteinleitungspunkten drei in ihrem Betrag beliebig veränderliche Kräfte ausgeübt werden, von denen zwei zueinander parallel und die dritte orthogonal zu den ersten beiden wirkt, ist es möglich, allein durch Veränderung der drei Lastkräfte die Größe der auf die Radschüssel wirkenden Axial- und Radialkraft und das daraus resultierende Biegemoment unabhängig voneinander einzustellen, ohne dabei die Lastangriffspunkte am Lasteinleitungselement verändern zu müssen. Es ist daher mit nur einer Maschine möglich, den gesamten Prüfbereich von einer Belastung mit einer reinen Radialkraft im Radaufstandspunkt ohne Moment bis hin zu einer Belastung mit einem reinen Moment ohne Radialkraft abzudecken, was einer Maschine mit einer fiktiven variablen Hebelarmlänge von Null bis Unendlich und wahlweise Axialkraftbeanspruchung entspricht. Mit der Erfindung ist es somit möglich, die Lastarten von praktisch allen existierenden Umlauf-Biegeprüfmaschinen zu erzeugen. Es ist daher mit der Erfindung nicht mehr erforderlich, für verschiedene Radtypen und Prüfverfahren unterschiedliche Prüfmaschinen zu benutzen. Da es mit der erfindungsgemäßen Vorrichtung auch möglich ist, mit den Lastkrafterzeugern während eines Prüfzeitraumes veränderliche Kräfte auf das Rad auszuüben, kann die Vorrichtung ähnlich wie ein zweiaxialer Rollprüfstand mit Reifen betrieben werden, mit dem es möglich ist, instationäre, also wechselnde Belastungen zu simulieren.

Weitere Merkmale und Vorteile der Erfindung ergeben sich aus der nachfolgenden Beschreibung und den Zeichnungen, worin bevorzugte Ausführungsformen der Erfindung an Beispielen näher erläutert sind. Es zeigt:

Fig. 1 ein schematisch dargestelltes Kraftfahrzeugrad mit Reifen in seiner am Kraftfahrzeug an der Radnabe montierten Stellung, in einem Diametralschnitt;

Fig. 2 eine erste Ausführungsform der erfindungsgemäßen Vorrichtung in einer schematischen Darstellung teilweise im Schnitt;

Fig. 3 bis 5 zwei weitere Ausführungsformen der Erfindung in einer Fig. 2 entsprechenden Darstellung.

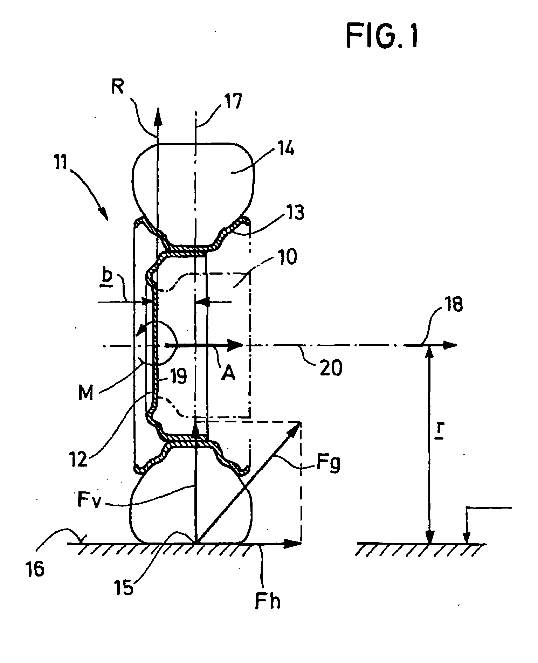

Fig. 1 zeigt in schematischer Darstellung ein an einer Radnabe 10 montiertes Kraftfahrzeugrad 11, das im wesentlichen aus einer Radschüssel 12 und einer damit verbundenen Radfelge 13 besteht, an der der Reifen 14 für das Rad montiert ist.

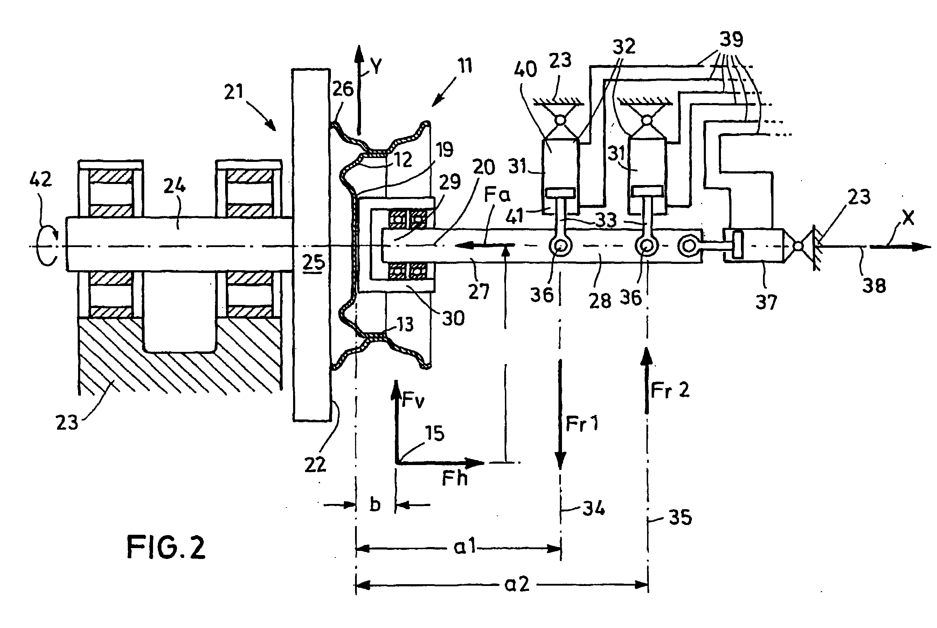

Im Fahrbetrieb wirken auf das Rad im wesentlichen zwei Kräfte ein, nämlich eine in radialer Richtung wirkende Radaufstandskraft Fv und eine in Achsrichtung des Rades wirkende Radseitenkraft Fh, wobei die Kraftresultierende Fg an einem Punkt 15 angreift, der auf der Schnittgeraden zwischen der Fahrbahn oder Radaufstandsfläche 16 und der Felgenmittelebene 17 liegen kann, je nach Verformung des Reifens im Fahrbetrieb aber auch seitlich versetzt neben der Felgenmittelebene 17 liegt. Der Angriffspunkt 15 ist somit in Axialrichtung 18 gegenüber der Anlagefläche 19 der Radschüssel um den veränderlichen Abstand b verschoben und hat einen radialen Abstand von der Radachse 20, die dem Radius r des Reifens entspricht. Radaufstandskraft Fv und Radseitenkraft Fh belastew das Rad bzw. dessen Radschüssel 12 mit einem Biegemoment M, einer Radialkraft R und einer Axialkraft A. Diese Belastung, die bei gleichbleibender Größe und Richtung der Kraftresultierenden Fg in Abhängigkeit von dem Abstand b und dem Radius r des Reifens variiert, soll bei einer Dauerfestigkeitsprüfung auf einem Prüfstand realitätsnah simuliert werden. Hierzu dient das nachfolgend beschriebene Verfahren, das mit Hilfe der in den Fig. 2 bis 5 dargestellten, erfindungsgemäßen Vorrichtung durchgeführt wird.

Fig. 2 zeigt in schematischer Darstellung eine erste Ausführungsform einer erfindungsgemäßen Prüfvorrichtung 21 für Kraftfahrzeugräder, mit einer Aufspannvorrichtung 22, die im wesentlichen aus einer am Maschinenrahmen 23 drehbar gelagerten Antriebswelle 24 und einer damit verbundenen Aufspannplatte 25 besteht. An der Aufspannplatte 25 ist das Fahrzeugrad 11 an seinem äußeren Felgenhorn 26 mit nicht dargestellten Haltepratzen festgespannt. Die Vorrichtung weist ferner ein Lasteinleitungselement 27 in Form eines Hebelarms 28 auf, der an seinem radseitigen Ende 29 mit einem Lagerelement 30 versehen ist, mit dem er an der Radschüssel 12 mittels nicht dargestellter Schrauben koaxial und drehbar angeschlossen ist.

Am Hebelarm 28 greifen in festen Abständen a1, a2 von der Anlagefläche 19 zwei Lastkrafterzeuger 31 in Form von Hydraulikzylindern 32 an, die sich mit ihrem zylinderseitigen Ende am Maschinenrahmen 23 abstützen. Die Hydraulikzylinder 32 sind so angeordnet, daß ihre Kolbenstangen 33 orthogonal zur Radachse 20 verlaufen, so daß sie auf den Hebelarm 28 zwei parallel zueinander verlaufende Lastkräfte Fr1, Fr2 erzeugen können, deren Wirkungslinien 34 bzw. 35 ebenfalls orthogonal zur Radachse 20 sind.

In ähnlicher Weise ist an einem dritten Lastangriffspunkt 36 ein dritter Lastkrafterzeuger 37 in Form eines Hydraulikzylinders angeordnet, der jedoch koaxial zur Radachse 20 ausgerichtet ist und der über seine Kolbenstange eine Kraft Fa auf das Lasteinleitungs-Element 27 ausüben kann, deren Wirkungslinie 38 mit der Radachse zusammenfällt und die somit orthogonal zu den beiden anderen, parallelen Kräften Fr1, Fr2 verläuft. Alle drei Hydraulikzylinder sind unabhängig voneinander über Druckmittelleitungen 39 mit unter Druck stehender Hydraulikflüssigkeit beaufschlagbar und können somit Kräfte beliebiger Größe sowohl mit positivem als auch negativem Vorzeichen in ihrer Bewegungsrichtung auf das Lasteinleitungselement 27 ausüben.

Mit dieser Anordnung ist es möglich, das Kraftfahrzeugrad 11 und insbesondere dessen Radschüssel 12 mit derselben Belastung zu beaufschlagen, wie sie auch im Fahrbetrieb durch die Radseitenkraft Fh und die Radaufstandskraft Fv ausgeübt werden, deren gemeinsamer Kraftangriffspunkt 15 im axialen Abstand b von der Anlagefläche 19 und im radialen Abstand des Radius r von der Drehachse des Rades liegt. Da der Abstand b und der Reifenradius r für jedes Rad bekannt sind und auch die Abstände a1, a2 bei der erfindungsgemäßem Vorrichtung festliegen, können die auf das Lasteinleitungselement 27 mittels der Hydraulikzylinder 32 auszuübenden Kräfte Fr1, Fr2, Fa in Abhängigkeit von den vorgegebenen Belastungen Fv, Fh leicht durch Aufstellung der Kräftegleichgewichte und des Momentengleichgewichtes um den eingezeichneten Koordinatenursprung, also den Schnittpunkt von Anlagefläche 19 und Radachse 20 ermittelt werden. Für die in Fig. 2 dargestellte Ausführungsform ergeben sich folgende Werte für die von den Hydraulikzylindern auf das Krafteinleitungs-Element auszuübenden Kräfte:

$$Fa = -Fh$$

$$Fr1 = [Fh \times r - Fv \times (a2 - b)] : (a2 - a1)$$

$$Fr2 = - (Fv + Fr1)$$

Man erkennt, daß sich die Lastkräfte Fa, Fr1, Fr2 eindeutig in Abhängigkeit von den vorgegebenen Werten des Abstands b, des Reifenradius r, der Radaufstandskraft Fv und der Radseitenkraft Fh ermitteln lassen. Die so errechneten Kräfte lassen sich von den Hydraulikzylindern durch Einstellung der Druckverhältnisse in ihren Zylinder- bzw. Ringräumen 40 bzw. 41 exakt einstellen, wozu diese zweckmäßig mit nicht dargestellten Kraftmeßdosen zwischen Maschinenrahmen 23 und Lastangriffspunkten 36 versehen sind. Wenn die Aufspannvorrichtung 22 mit daran montiertem Rad drehend angetrieben wird, wie dies durch den Pfeil 42 angedeutet ist, wird die Radschüssel im Umlauf-Biegeprüfverfahren damit einer sehr realistischen Beanspruchung wie im Fahrbetrieb unterworfen. Es ist mit der beschriebenen Vorrichtung aber gleichfalls möglich, auch die Arbeitsweise einfacherer Umlauf-Biegeprüfmaschinen zu simulieren, beispielsweise einer solchen Maschine, die auf das Rad nur eine im Abstand b von der Anlagefläche 19 angreifende Radialkraft und ein entsprechendes Biegemoment ausübt. Auch in diesem Fall kann die dann vorgegebene Hebelarmlänge und die ebenfalls vorgegebene Radialkraft ohne Veränderung der Lastangriffspunkte 36 von den Lastkrafterzeugern 31 simuliert werden, wobei in diesem Spezialfall der dritte Lastkrafterzeuger 37 keine Axialkraft auf den Hebelarm 28 ausübt.

Es ist also mit lediglich dieser einen Vorrichtung möglich, nicht nur Räder verschiedener Größe und mit unterschiedlichen Einpresstiefen zu prüfen, sondern auch die unterschiedlichen Vorgaben hinsichtlich des Prüfverfahrens durch die Fahrzeughersteller zu berücksichtigen. Es ist daher für Räderhersteller, die viele verschiedene Räder für verschiedene Abnehmer herstellen, nicht länger erforderlich, einen großen Maschinenpark der unterschiedlichsten Umlauf-Biegeprüfmaschinen zu unterhalten.

Mit der beschriebenen Vorrichtung ist es nicht nur möglich, stationäre Belastungen auf das Rad auszuüben, indem die von den Zylindern erzeugten Kräfte während eines Versuchs gleich groß bleiben. Vielmehr ist es auch möglich, die von den Zylindern ausgeübten Radial- und Axialkräfte während eines Versuches zu ändern, das Rad also instationär zu belasten, wodurch die Vorrichtung wie ein zweiaxialer Rollprüfstand mit Reifen betrieben werden kann, mit dem es möglich ist, sogenannte Nachfahrversuche am Rad durchzuführen. Die Ansteuerung der Hydraulikzylinder erfolgt dann mit Hilfe einer hier nicht näher dargestellten Regelungs- bzw. Steuereinrichtung.

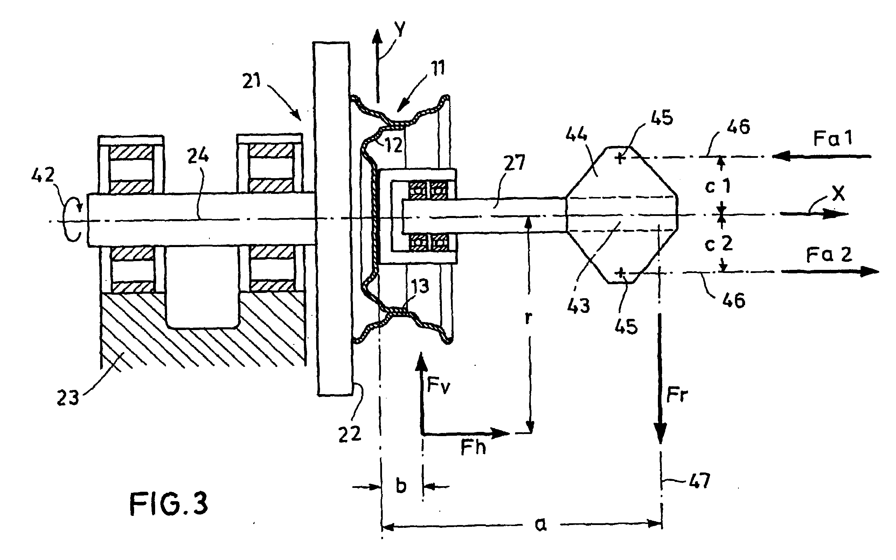

Fig. 3 zeigt eine zweite Ausführungsform der Vorrichtung nach der Erfindung. Bei dieser Ausführungsform ist das Lasteinleitungselement 27 an seinem hinteren, freien Ende 43 mit einer radial nach zwei Seiten von dem Hebelarm 28 vorspringenden Kragplatte 44 versehen. Am radial äußeren Ende der Kragplatte 44 befinden sich in Abständen c1, c2 von der Radachse 20 zwei Lastangriffspunkte 45, an denen zwei Lastkrafterzeuger angreifen, die im vorliegenden Fall nicht gesondert dargestellt sind, die jedoch wie bei der in Fig. 2 dargestellten Ausführungsform im wesentlichen aus Hydraulikzylindern bestehen. Die von diesen Lastkrafterzeugern auf das Lasteinleitungselement 27 ausgeübten Axialkräfte Fa1, Fa2 haben Wirkungslinien 46, die parallel zueinander und zur Radachse 20 verlaufen. Am freien Ende 43 des Lasteinleitungselementes 27 greift unter einem Abstand a von der Anlagefläche 19 der Radschüssel noch ein dritter Lastkrafterzeuger an, der der Einfachheit halber hier ebenfalls nicht dargestellt ist und der auf das Lasteinleitungselement eine dritte Kraft Fr ausüben kann, deren Wirkungslinie 47 rechtwinklig zu den Wirkungslinien der beiden Axialkräfte Fa1, Fa2 verläuft.

Auch bei dieser Ausführungsform ist es möglich, durch Variation allein der Kräfte Fa1, Fa2 und Fr ohne Veränderung von deren Lastangriffspunkten dieselbe Belastung auf das Rad, insbesondere dessen Radschüssel auszuüben, die im Fahrbetrieb durch die Radseitenkraft FH und die Radaufstandskraft FV verursacht wird. Für die Berechnung der beiden Axiallasten Fa1, Fa2 und der aufzubringenden Radiallast Fr in Abhängigkeit von den vorgegebenen Werten für Radaufstands- und Radseitenkraft, Radius $\underline{r}$ und Abstand $\underline{b}$ gelten für diese Auführungsform die nachfolgend wiedergegebenen Gleichungen:

$$Fr = - Fv$$

$$Fa1 = [Fv \times (b - a) + Fh \times (r - c2)] : (c1 + c2)$$

$$Fa2 = - Fh - Fa1.$$

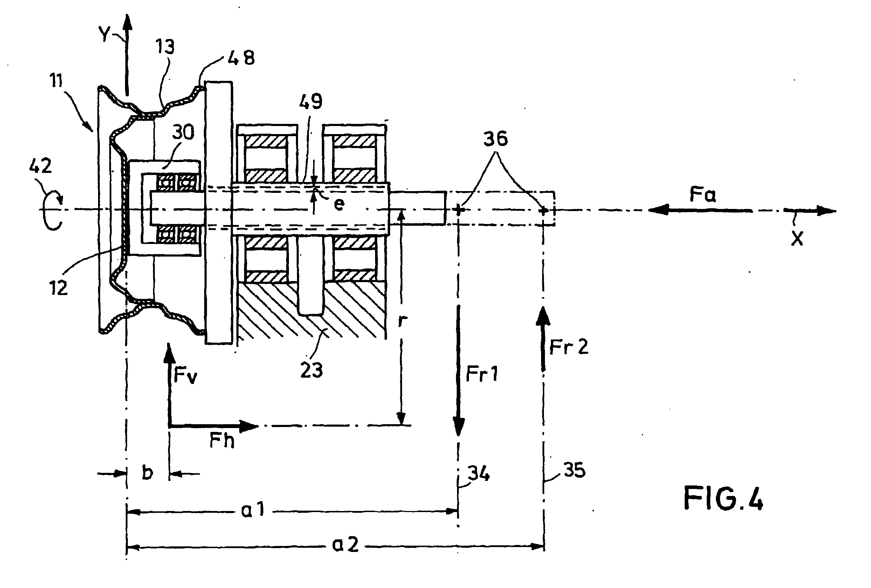

Bei der in Fig. 4 dargestellten Ausführungsform der erfindungsgemäßen Vorrichtung ist das Rad 11 an seinem inneren Felgenhorn 48 an der Aufspannplatte 25 befestigt. Um hier gleichwohl eine besonders einfache Montage des Rades auf dem Prüfstand zu ermöglicher, ist die Antriebswelle 24 der Aufspannvorrichtung als Hohlwelle ausgestaltet und das Lasteinleitungselement 27 durchsetzt die Hohlwelle mit Spiel e und ragt an deren rückwärtigen Ende 50 aus dieser heraus. Wie schon bei der Ausführungsform nach Fig. 2 greifen auch hier am Lasteinleitungselement 27 zwei (nicht dargestellte) parallele Lastkrafterzeuger an, die radial zur Radachse gerichtete Lastkräfte FR1, FR2 auf das Lasteinleitungselement 27 ausüben können. Ein dritter (ebenfalls nicht dargestellter) Lastkrafterzeuger kann auf das Lasteinleitungselement 27 eine Axiallast Fa ausüben.

Da das Lasteinleitungselement 27 die Hohlwelle 49 mit Spiel durchsetzt, werden die eingeleiteten Kräfte FR1, FR2, Fa wie auch bei den anderen beiden Ausführungsformen in voller Höhe von dem Lagerelement 30 auf die Radschüssel 12 übertragen. Auch hier ist es somit möglich, die Lastkrafterzeuger so einzustellen, daß sie auf das Rad die gleiche Belastung ausüben wie eine zu simulierende Radaufstands- und Radseitenkraft FV bzw. FH, die unter einem gedachten Radaufstandspunkt 15 am Rad angreifen. Die Gleichungen zur Berechnung der Radialkräfte FR und der Axialkraft FA in Abhängigkeit von Abstand $\underline{b}$, Radius $\underline{r}$ und Größe der Radaufstands- bzw. Radseitenkraft FV bzw. FH sind hier dieselben wie bei der ersten, in Zusammenhang mit Fig. 3 beschriebenen Ausführungsform.

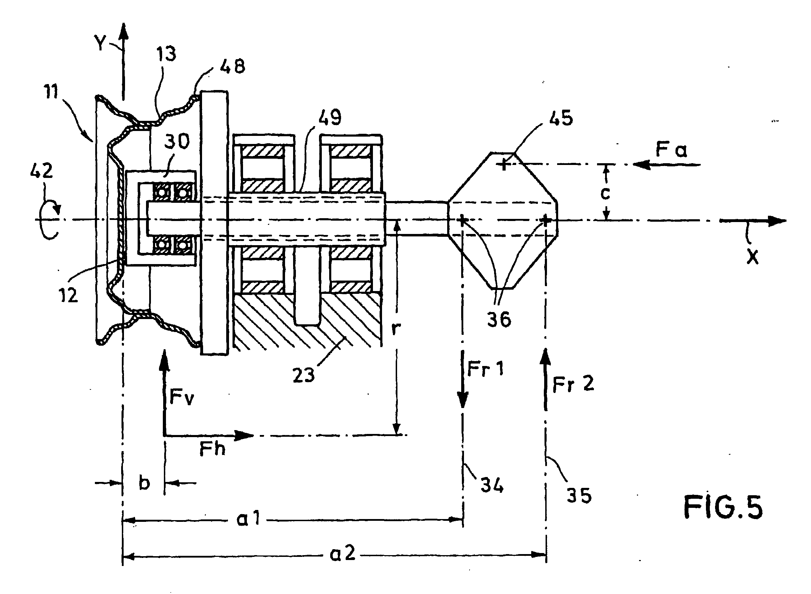

Die in Fig. 5 dargestellte Ausführungsform entspricht weitgehend der Vorrichtung nach Fig. 4; jedoch greift hier die Axialkraft Fa nicht genau zentrisch in der X-Achse des Lasteinleitungselements 27 an, sondern unter einem axialen Versatz $\underline{c}$ an einem Lastangriffspunkt 45. Für diesen allgemeinen Fall gelten dann zur Bestimmung der Axiallast Fa und der beiden Radialkräfte Fr1, Fr2 in Abhängigkeit von den vorgegebenen Werten für Radaufstands- und Radseitenkraft, Reifenradius r und Abstand b folgende Gleichgewichts-Gleichungen:

$$Fa = - Fh$$

$$Fr1 = [Fv \times (a2 - b) - Fh \times (c + r)] (a1 - a2)$$

$$Fr2 = - Fv - Fr1.$$

Man erkennt, daß die oben angegebenen Bestimmungsgleichungen für die Ausführungsformen nach den Fig. 2 und 4 einen Sonderfall der allgemeinen Gleichungen gemäß Fig. 5 darstellen, in dem für den Axialabstand $\underline{c}$ der Wert 0 eingesetzt ist.

Die Erfindung ist nicht auf die dargestellten und beschriebenen Beispiele beschränkt, sondern es ergeben sich eine Vielzahl von Änderungen und Ergänzungsmöglichkeiten, ohne den Rahmen der Erfindung zu verlassen. So ist es beispielsweise möglich, die beiden parallel zueinander auf das Lasteinleitungselement einwirkenden Kräfte nicht genau radial oder achsparallel zur Radachse an dem Hebelarm 28 angreifen zu lassen, sondern es ist auch denkbar, daß die Wirkungslinien der beiden parallelen Kräfte unter einem beliebigen Winkel zur Radachse verlaufen. Auch muß die Wirkungslinie der dritten Kraft nicht unbedingt orthogonal zu den Wirkungslinien der beiden parallelen Kräfte verlaufen, sondern es ist auch hier eine Anordnung unter praktisch.jedem beliebigen Winkel denkbar, solange nicht die Wirkungslinie der dritten Kraft wiederum parallel zu den Wirkungslinien der ersten beiden Kräfte ist. Sofern mit der Maschine nur solche Prüfverfahren simuliert werden sollen, bei denen das Rad lediglich mit einer Radialkraft und einem Biegemoment belastet wird, ist es bei den in Fig. 2 und Fig. 4 dargestellten Ausführungsformen auch möglich, auf den axial auf den Hebelarm 28 wirkenden Lastkrafterzeuger zu verzichten. Anstelle von Hydraulikzylindern können auch andere Lastkrafterzeuger verwendet werden, beispielsweise Gewichte, Zug- oder Druckfedern, Pneumatikzylinder od.dgl..

Die beschriebene Vorrichtung und das Verfahren eignen sich zum Prüfen praktisch aller Kraftfahrzeugräder einschließlich Gußräder, LKW-Räder usw.

**Patentansprüche**

1. Vorrichtung zur Festigkeitsprüfung von Kraftfahrzeugrädern (11), die im wesentlichen aus einer Radfelge (13) und einer daran angeschlossenen Radschüssel (12) bestehen, mit einem an der Radfelge (13) oder der Radschüssel (12) anschließbaren Lasteinleitungselement (27), an dem zwei Lastkrafterzeuger (31) im Abstand (a2-a1) voneinander angreifen, wobei die damit erzeugbaren Lastkräfte (Fr1, Fr2) parallel zueinander auf das Lasteinleitungselement (27) einwirken, und wobei ein dritter Lastkrafterzeuger (37) am Lasteinleitungselement (27) so angreift, daß die damit erzeugbare dritte Lastkraft (Fa) eine Wirkungslinie (38) hat, die unter einem Winkel zu den Wirkungslinien (34,35) der beiden parallelen Lastkräfte (Fr1, Fr2) verläuft, **dadurch gekennzeichnet, daß** die Lastkräfte (Fr1, Fr2, Fa) in ihrer Größe frei einstellbar sind und daß eine Aufspannvorrichtung (22) für das jeweils andere Radbauteil (12 bzw. 13) vorgesehen ist, die relativ zum Lasteinleitungselement (27) drehbar und antreibbar an einem Maschinenrahmen (23) der Vorrichtung (21) angeordnet ist.

2. Vorrichtung nach Anspruch 1, **dadurch gekennzeichnet, daß** die Lastkrafterzeuger (31,37) Hydraulikzylinder (32) sind.

3. Vorrichtung nach Anspruch 1 oder 2, **dadurch gekennzeichnet, daß** das Lasteinleitungselement (27) im wesentlichen aus einem etwa koaxial und drehbar am Rad (11) anschließbaren Hebelarm (28) besteht.

4. Vorrichtung nach einem der Ansprüche 1 bis 3, **dadurch gekennzeichnet, daß** das Rad (11) mit seiner Radfelge (13) an der Aufspannvorrichtung (22) befestigbar und das Lasteinleitungselement (27) an der Radschüssel (12) anschließbar ist.

5. Vorrichtung nach einem der Ansprüche 1 bis 4, **dadurch gekennzeichnet, daß** die Aufspannvorrichtung (22) im wesentlichen aus einer an einer Antriebswelle (24) angeordneten Aufspannplatte (25) besteht.

6. Vorrichtung nach einem der Ansprüche 1 bis 5, **dadurch gekennzeichnet, daß** das Lasteinleitungselement (27) an seinem radseitigen Ende (29) mit einem Lagerelement (30) zum Anschluß an das Rad (11) versehen ist.

7. Vorrichtung nach einem der Ansprüche 1 bis 6, **dadurch gekennzeichnet, daß** die Lastkrafterzeuger (31) für die parallelen Lastkräfte (Fr1, Fr2) orthogonal zur Radachse (20) am Lasteinleitungselement (27) angreifen.

8. Vorrichtung nach einem der Ansprüche 1 bis 7, **dadurch gekennzeichnet, daß** die Lastkrafterzeuger für die parallelen Lastkräfte (Fa1, Fa2) parallel zur Radachse (20) am Lasteinleitungselement (27) angreifen.

9. Vorrichtung nach einem der Ansprüche 1 bis 8, **dadurch gekennzeichnet, daß** der Lastkrafterzeuger (37) für die dritte Lastkraft (Fa) orthogonal zu den Wirkungslinien (34,35) der parallelen Lastkräfte (Fr1, Fr2) am Lasteinleitungselement (27) angreift.

10. Vorrichtung nach einem der Ansprüche 1 bis 9, **dadurch gekennzeichnet, daß** die Radfelge (13) mit ihrem äußeren Felgenhorn (26) an der Aufspannvorrichtung (22) befestigbar ist.

11. Vorrichtung nach einem der Ansprüche 1 bis 10, **dadurch gekennzeichnet, daß** die Radfelge (13) mit ihrem inneren Felgenhorn (48) an der Aufspannvorrichtung (22) befestigbar ist.

12. Vorrichtung nach einem der Ansprüche 1 bis 11, **dadurch gekennzeichnet, daß** die Aufspannvorrichtung (22) mittels einer Hohlwelle (49) am Maschinenrahmen (23) drehbar gelagert ist, wobei das Lasteinleitungselement (27) die Hohlwelle (49) mit Spiel (e) durchsetzt.

13. Verfahren zum Prüfen der Festigkeit von im wesentlichen aus einer Radfelge (13) und einer Radschüssel (12) bestehenden Kraftfahrzeugrädern, bei dem über ein Lasteinleitungselement (27) eine die Radaufstands- und Radseitenkraft (Fv, Fh) im Fahrbetrieb simulierende Last auf die Radschüssel (12) ausgeübt wird, wobei die Last in Form eines am Lasteinleitungselement (27) wirkenden, durch zwei antiparallele Kräfte erzeugten freien Moments, einer zusätzlichen, am Lasteinleitungselement (27) an einem der Lastangriffspunkte (36) des freien Moments parallel zu den Wirkungslinien der antiparallelen Lastkräfte angreifenden Kraft sowie einer weiteren Kraft (Fa) erzeugt wird, deren Wirkungslinie (38) orthogonal zu den Wirkungslinien (34,35) der ersten Kraft und der antiparallelen Lastkräfte ist, **dadurch gekennzeichnet, daß** das Rad mit seiner Radfelge (13) an einer Aufspannvorrichtung (22) befestigt wird, die während Ausübung der Last relativ zum Lasteinleitungselement (27) gedreht wird, und daß die Größen des Moments und der Kräfte frei wählbar sind.

14. Verfahren nach Anspruch 13, **dadurch gekennzeichnet, daß** das die beiden das freie Moment erzeugenden antiparallelen Kräfte an festen Kraftangriffspunkten (36) auf das Lasteinleitungselement (27) einwirken.

**15.** Verfahren nach Anspruch 14, **dadurch gekennzeichnet,daß** die antiparallelen Kräfte orthogonal zur Drehachse (20) des Rades (11) auf das Lasteinleitungselement (27) wirken.

**16.** Verfahren nach Anspruch 14, **dadurch gekennzeichnet, daß** die antiparallelen Kräfte parallel zur Drehachse (20) des Rades (11) auf das Lasteinleitungselement (27) wirken.

**17.** Verfahren nach einem der Ansprüche 13 bis 16, **dadurch gekennzeichnet, daß** das freie Moment und die Kräfte mittels am Lasteinleitungselement (27) an festen Kraftangriffspunkten (36) angreifenden Hydraulikzylindern (32) erzeugt wird/werden.

**18.** Verfahren nach einem der Ansprüche 13 bis 19, **dadurch gekennzeichnet, daß** die Größen der an den Kraftangriffspunkten (36) angreifenden Kräfte (Fr1, Fr2, Fa bzw. Fa1, Fa2, Fr) aus der Größe der zu simulierenden Radaufstands- und Radseitenkräfte (Fv, Fn), der Lage des Reifenaufstandspunktes (15) und der Lage der Kraftangriffspunkte (36) ermittelt werden.

**Claims**

**1.** Apparatus for testing the strength of vehicle wheels (11) which essentially consist of a wheel rim (13) and a wheel bowl (12) connected thereto, with a load application element (27) connectable to the wheel rim (13) or the wheel bowl (12), which element is engaged by two load force generators (31) with a distance (a2 - a1) from one another, whereby the load forces (Fr1, Fr2) which can be generated therewith act in a parallel manner on the load application element (27), and whereby a third load force generator (37) engages the load application element (27) in such a manner that the third load force (Fa) which can be generated therewith has an action line (38) which has an angle to the action lines (34,35) of the two parallel load forces (Fr1, Fr2), **characterised in that** the load forces (Fr1, Fr2, Fa) can freely be adjusted in their magnitude and that a clamping device (22) is provided for the respective other wheel component (12 or 13) which device is arranged in a rotatable and driveable manner at a machine frame (23) of the apparatus relative to the load application element (27).

**2.** Apparatus according to claim 1, **characterised in that** the loading force generators (31, 37) are hydraulic cylinders (32).

**3.** Apparatus according to claim 1 or 2, **characterised in that** the load application element (27) essentially consists of a lever arm (28) which is approximately coaxial and which can be connected to the wheel (11) in a rotatable manner.

**4.** Apparatus according to one of claims 1 to 3, **characterised in that** the wheel (11) can be secured to the clamping device (22) with its wheel rim (13) and that the load application element (27) can be connected to the wheel bowl (12).

**5.** Apparatus according to one of claims 1 to 4, **characterised in that** the clamping device (22) essentially consists of a clamping plate (25) arranged on a drive shaft (24).

**6.** Apparatus according to one of claims 1 to 5, **characterised in that** the load application element (27) is provided with a bearing element (30) at the wheel side end (29) for connection to the wheel (11).

**7.** Apparatus according to one of claims 1 to 6, **characterised in that** the load force generators (31) for the parallel load forces (Fr1, Fr2) engage the load application element (27) perpendicular to the wheel axle (20).

**8.** Apparatus according to one of claims 1 to 7, **characterised in that** the load force generators for the parallel load forces (Fa1, Fa2) engage the load application element (27) parallel to the wheel axle (20).

**9.** Apparatus according to one of claims 1 to 8, **characterised in that** the load force generator (37) for the third load force (Fa) engages the load application element (27) perpendicular to the line of action (34,35) of the parallel load forces (Fr1, Fr2).

**10.** Apparatus according to one of claims 1 to 9, **characterised in that** the wheel rim (13) can be secured to the clamping device (22) with its outer rim horn (26).

**11.** Apparatus according to one of claims 1 to 10, **characterised in that** the wheel rim (13) can be secured to the clamping device (22) with its inner rim horn (48).

**12.** Apparatus according to one of claims 1 to 11, **characterised in that** the clamping device (22) is mounted to the machine frame (23) in a rotatable manner by means of a hollow shaft (49), whereby the load application element (27) is pushed through the hollow shaft (49) with a clearance (e).

**13.** Method for testing the strength of vehicle wheels consisting essentially of a wheel rim (13) and a wheel bowl (12), where the load of the vertical wheel force and the wheel side force simulated during the drive operation is exerted on the wheel bowl (12), whereby the load is generated in the form of a free torque generated by two non-parallel forces acting on the load application element (27), an additional force engaging the load application element (27) at one of the points of application (36) of the free torque parallel to the action lines of the non-parallel load forces as well as a further force (Fa), the action (38) line of which is perpendicular to the action lines (34,35) of the first force and the non-parallel load forces, **characterised in that** the wheel is secured to a clamping device (22) with its wheel rim (13), which device is rotated relative to the load application element (27) during the application of the load, and that the magnitudes of the torque and of the forces can be chosen freely.

14. Method according to claim 13, **characterised in that** the two non-parallel forces producing the free torque act at rigid points of application (36) of the force on the load application element (27).

15. Method according to claim 14, **characterised in that** the non-parallel forces act on the load application element (27) perpendicular to the axis of rotation (20) of the wheel (11).

16. Method according to claim 14, **characterised in that** the non-parallel forces act on the load application element (27) parallel to the axis of rotation (20) of the wheel (11).

17. Method according to one of claims 13 to 16, **characterised in that** the free torque and the forces is/are produced by means of hydraulic cylinders (32) engaging the load application element (27) at rigid points of application (36) of the force.

18. Method according to one of claims 13 to 17, **characterised in that** the magnitudes of the forces (Fr1, Fr2, Fa or Fa1, Fa2, Fr) engaging on the points of application (36) of the force are determined from the magnitude of the vertical and side wheel forces (Fv, Fn) to be simulated, the position of the vertical wheel point (15) and the position of the force of the points of application (36) of the force.

## Revendications

1. Dispositif pour tester la résistance de roues de véhicule (11) essentiellement constituées d'une jante (13) et d'un flasque (12) qui y est raccordé, comprenant un élément de mise en charge (27) pouvant être raccordé à la jante (13) ou au flasque (12), et sur lequel deux générateurs de force de chargement (31) sont appliqués à distance (a2 - al) l'un de l'autre, les forces de chargement (Fr1, Fr2) pouvant ainsi être générées agissant parallèlement l'une à l'autre sur l'élément de mise en charge (27), tandis qu'un troisième générateur de force de chargement (37) est appliqué sur l'élément de mise en charge (27) de telle manière que la troisième force de chargement (Fa) ainsi générée a une ligne d'action (38) qui forme un angle avec les lignes d'action (34, 35) des deux forces de chargement parallèles (Fr1, Fr2), **caractérisé en ce que** les forces de chargement (Fr1, Fr2, Fa) sont librement réglables en valeur, et **en ce qu'**il est prévu pour l'autre respectif des composants de la roue (12 ou respectivement 13) un dispositif de bridage (22) qui est monté sur un cadre de machine (23) du dispositif (21), avec possibilité pour le dispositif de bridage de tourner et d'être entraîné par rapport à l'élément de mise en charge (27).

2. Dispositif selon la revendication 1, **caractérisé en ce que** les générateurs de force de chargement (31, 37) sont des vérins hydrauliques (32).

3. Dispositif selon la revendication 1 ou 2, **caractérisé en ce que** l'élément de mise en charge (27) est essentiellement constitué d'un bras de levier (28) pouvant être raccordé à la roue (11) de façon rotative et sensiblement coaxiale.

4. Dispositif selon l'une des revendications 1 à 3, **caractérisé en ce que** la roue (11) peut être fixée au dispositif de bridage (22) par sa jante (13) et l'élément de mise en charge (27) peut être raccordé au flasque (12) de la roue.

5. Dispositif selon l'une des revendications 1 à 4, **caractérisé en ce que** le dispositif de bridage (22) est essentiellement constitué d'une plaque de bridage (25) montée sur un arbre d'entraînement (24).

6. Dispositif selon l'une des revendications 1 à 5, **caractérisé en ce que** l'élément de mise en charge (27) est muni d'un élément de palier (30) à son extrémité (29) côté roue, pour le raccordement à la roue (11).

7. Dispositif selon l'une des revendications 1 à 6, **caractérisé en ce que** les générateurs de forces de chargement (31) pour les forces de chargement parallèles (Fr1, Fr2) sont appliqués sur l'élément de mise en charge (27) orthogonalement à l'axe de roue (20).

8. Dispositif selon l'une des revendications 1 à 7, **caractérisé en ce que** les générateurs de forces de chargement pour les forces de chargement parallèles (Fa1, Fa2) sont appliqués sur l'élément de mise en charge (27) parallèlement à l'axe de roue (20).

9. Dispositif selon l'une des revendications 1 à 8, **caractérisé en ce que** le générateur de force de chargement (37) pour la troisième force de chargement (Fa) est appliqué sur l'élément de mise en charge (27) orthogonalement aux lignes d'action (34, 35) des forces de chargement parallèles (Fr1, Fr2).

10. Dispositif selon l'une des revendications 1 à 9, **caractérisé en ce que** la jante (13) de la roue peut être fixée au dispositif de bridage (22) par son bord de jante extérieur (26).

11. Dispositif selon l'une des revendications 1 à 10, **caractérisé en ce que** la jante (13) de la roue peut être fixée au dispositif de bridage (22) par son bord de jante intérieur (48).

12. Dispositif selon l'une des revendications 1 à 11, **caractérisé en ce que** le dispositif de bridage (22) est monté rotatif sur le cadre de machine (23) au moyen d'un arbre creux (49), l'élément de mise en charge (27) traversant l'arbre creux (49) avec jeu (e).

13. Procédé pour tester la résistance de roues de véhicule essentiellement constituées d'une jante (13) de la roue et d'un flasque (12) de la roue, dans lequel par l'intermédiaire d'un élément de mise en charge (27), on exerce sur le flasque (12) de la roue un chargement simulant la force d'appui de la roue et la force latérale de la roue (Fv, Fh) en circulation, la charge étant produite sous la forme d'un moment libre s'exerçant sur l'élément de mise en charge (27), généré par deux forces anti-parallèles, d'une force additionnelle appliquée à l'élément de mise en charge (27) en un des points d'application de charge (36) du moment libre parallèlement aux lignes d'action des forces de chargement anti-parallèles, ainsi que d'une autre force (Fa), dont la ligne d'action (38) est perpendiculaire aux lignes d'action (34, 35) de la première force et des forces de chargement anti-parallèles, **caractérisé en ce que** l'on fixe la roue par sa jante (13) sur un dispositif de bridage (22) que l'on fait tourner par rapport à l'élément de mise en charge (27) pendant que s'exerce le chargement, et **en ce que** les valeurs du moment et des forces peuvent être choisies librement.

14. Procédé selon la revendication 13, **caractérisé en ce que** les deux forces anti-parallèles générant le moment libre agissent sur l'élément de mise en charge (27) en des points d'application de force (36) fixes.

15. Procédé selon la revendication 14, **caractérisé en ce que** les forces anti-parallèles agissent sur l'élément de mise en charge (27) orthogonalement à l'axe de rotation (20) de la roue (11).

16. Procédé selon la revendication 14, **caractérisé en ce que** les forces anti-parallèles agissent sur l'élément de mise en charge (27) parallèlement à l'axe de rotation (20) de la roue (11).

17. Procédé selon l'une des revendications 13 à 16, **caractérisé en ce que** le moment libre et les forces sont générées au moyen de vérins hydrauliques (32) appliqués sur l'élément de mise en charge (27) en des points d'application d'effort fixes (36).

18. Procédé selon l'une des revendications 13 à 17, **caractérisé en ce que** les valeurs des forces (Fr1, Fr2, Fa ou respectivement Fa1, Fa2, Fr) appliquées aux points d'application d'effort (36) sont obtenues à partir de la valeur des forces d'appui de la roue et latérale de la roue (Fv, Fn) à simuler, de la position du point d'appui du pneu (15) et de la position des points d'application d'effort (36).

# FIG.1

FIG.2

EP 0 916 935 B1

FIG.3

EP 0 916 935 B1

FIG.4

EP 0 916 935 B1

FIG.5

EP 0 916 935 B1